Europäisches Patentamt

European Patent Office

Office européen des brevets

(19)

(11) Publication number: **0 096 203**

**A1**

(12) **EUROPEAN PATENT APPLICATION**

(21) Application number: **83103963.1**

(22) Date of filing: **22.04.83**

(51) Int. Cl.³: **G 09 F 9/35**
**G 02 F 1/13**

(30) Priority: **06.05.82 GB 8213094**
**22.06.82 GB 8217979**

(43) Date of publication of application:
**21.12.83 Bulletin 83/51**

(84) Designated Contracting States:
**CH DE FR IT LI NL**

(71) Applicant: **International Standard Electric Corporation**
**320 Park Avenue**
**New York New York 10022(US)**

(72) Inventor: **Crossland, William Alden**
**15 School Lane**
**Harlow, Essex(GB)**

(72) Inventor: **Ayliffe, Peter John**
**150 Heath Row**
**Bishop's Stortford Hertfordshire(GB)**

(72) Inventor: **Davey, Anthony Bernard**
**26 Boyd Close**
**Bishop's Stortford Hertfordshire(GB)**

(74) Representative: **Pohl, Heribert, Dipl.-Ing et al,**
**Standard Elektrik Lorenz AG Patent- und Lizenzwesen**
**Kurze Strasse 8 Postfach 300 929**
**D-7000 Stuttgart 30(DE)**

(54) Transmission type liquid crystal display device.

(57) An optically scattering transmission type matrix addressed liquid crystal device back-lit via an optical louvre (20), whose elements register with a set of optical filters ($21_R$, $21_G$, $21_B$) of different colour such that by selective energisation of the matrix elements a polychromatic image can be displayed.

Fig.2.

**0096203**

W.A. Crossland-P.J. Ayliffe-
A.B. Davey 36-6-2

## TRANSMISSION TYPE LIQUID CRYSTAL DISPLAY DEVICE

This invention relates to optically scattering transmission type liquid crystal display devices. Devices of this type have been proposed in which the liquid crystal layer is backed by an optical louvre system or equivalent means which minimises or eliminates the transmission of light normally through the layer so that light scattering regions of the layer stand revealed against a dark background. The present invention is concerned with using this type of illumination system to generate polychromatic images in a matrix addressed display device.

According to the present invention there is provided a transmission type matrix addressed liquid crystal display device operable in a scattering mode, which device includes a liquid crystal layer sandwiched between two transparent electroded substrates and is constructed for being back lit at an oblique angle via illumination control means adapted to minimise or eliminate direct transmission of light through the layer within an intended range of display viewing angle, whereby portions of the layer that scatter light in a forward direction are revealed against a dark background, wherein the illumination control means incorporates a plurality of filters of different colours in optical registry with the elements of the matrix array, whereby the device is operable to provide a polychromatic image.

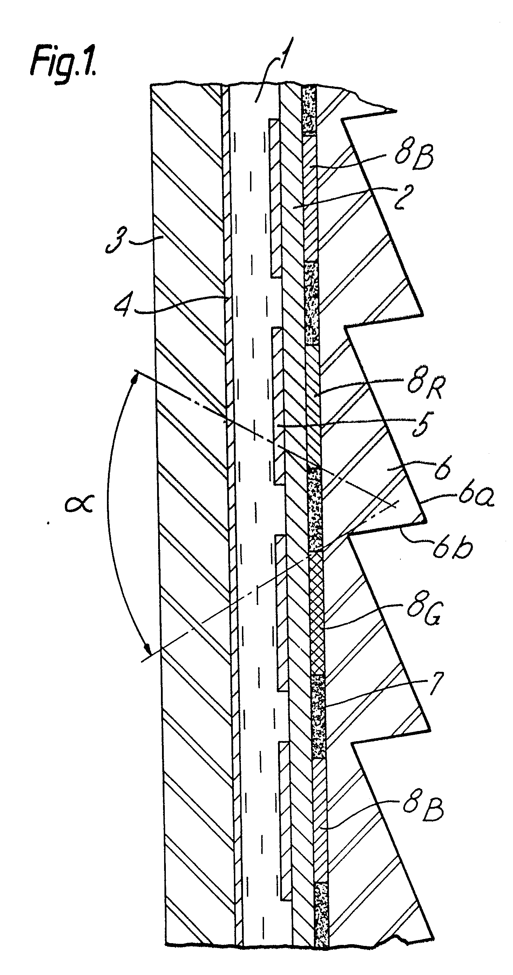

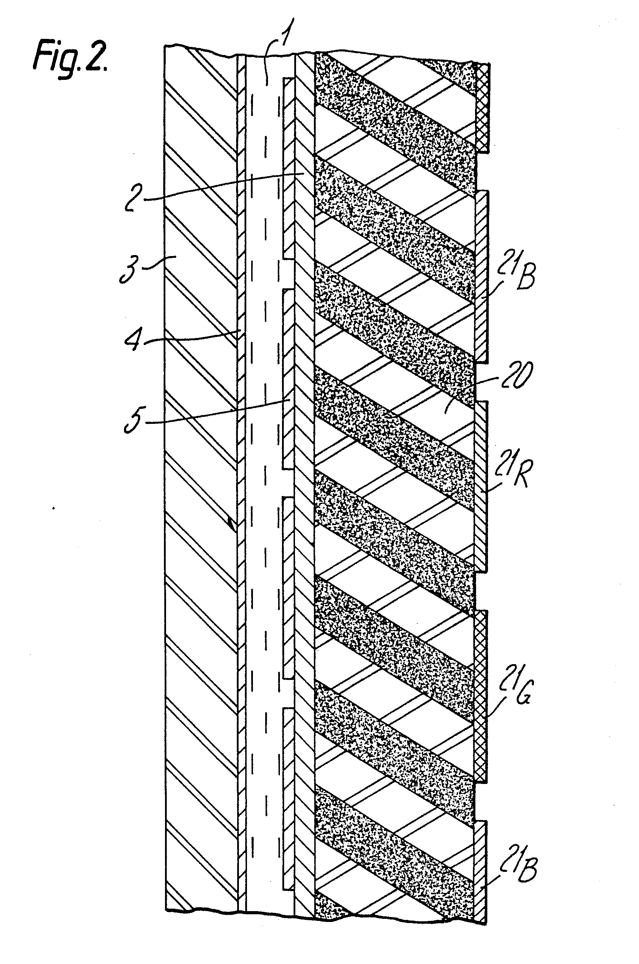

There follows a description of display devices embodying the invention in preferred forms. The description refers to the accompanying drawings in which:-
Figures 1 and 2 depict schematic cross-sections of parts of two alternative designs of display device.

Referring to Figure 1, a hermetic enclosure for a layer 1 of liquid crystal is formed by securing with an edge seal (not shown) a back transparent sheet 2 to a front transparent sheet 3. Typically the spacing between the sheets, and thus the thickness of the liquid crystal layer, is maintained substantially uniform over the whole display area in known manner by a scattering of short lengths of glass fibre (not shown) of uniform diameter distributed through the liquid crystal layer. The inward facing surfaces of the front and back sheets 2 and 3 are provided with sets of column and row transparent electrodes 4 and 5 respectively, which permit the display to be addressed on a co-ordinate matrix array basis. Typically these electrodes are made of indium/tin oxide. The back sheet is typically made thinner than the front sheet in order that it shall readily conform to the surface contour of the inward facing surface of the front sheet, and while the front sheet is typically made of glass, which can be 2 to 3 mm thick, the rear sheet can conveniently be made of a polyester film.

Secured to the rear face of the back sheet, and in registry with its electrodes, is means for controlling the illumination of the display from the rear in such a manner that the observer cannot see direct illumination, but only scattered light. This objective is achieved by a saw-tooth-profile shaped transparent sheet 6 of glass or plastics provided with a black, preferably matt, series of long planes 6a with clear intervening planes 6b. The long planes 6a are required to present black faces to the liquid crystal layer, but on the opposite side may be white or reflecting. The front face of the serrated sheet 6 is covered with a composite filter comprising a set of black stripes 7 interspersed with a cyclically repetitive set of filters of different colours. Typically the set is a set of three comprising $8_R$, $8_G$ and $8_B$, which are red, green and blue respectively. One alternative is to use a set of four in which white is added to red, green and blue, so as to afford extra brightness, albeit at the expense of decreased saturation. The black stripes register with the short planes 6a so as to block the direct transmission of light through the device over the intended range of viewing angle . In this way light only reaches the observer if the liquid crystal is scattering, as opposed to clear, in the region registering with a portion of any one of the row electrodes 5 of the back sheet 2, and the colour of that scattered light is determined by the colour of the corresponding filter 8. Any region of the liquid crystal that is not scattering will appear black by virtue of the blackness of the forward-facing surfaces of the planes 6a or of the stripes 7.

Figure 2 depicts an alternative form of display device using the same construction of liquid crystal cell as described with reference to Figure 1, but with the serrated sheet 6 and its associated filters 7 and $8_R$, $8_G$ and $8_B$ replaced by an optical louvre 20 (as for instance marketed by the 3M Company) and associated filter strips $21_R$, $21_G$ and $21_B$. In this instance it is convenient, though not necessary, to mount the red, green and blue filter strips on the rear face of the optical louvre rather than the front. The louvres are aligned to extend in the same direction as the row electrodes 5, and the pitch of the louvre windows may be a multiple of the pitch of the electrodes 5, so that two or more windows register with each electrode.

Reverting attention to the display cell part of the device, this must be of the scattering type. For this purpose it is possible to use a smectic phase scattering display mode such as that described by D.Coates et al, in a paper entitled 'Electrically induced scattering textures in smectic A phases and their electrical reversal' appearing in the Journal of Physics D: Applied Physics, Volume 11 pages 2025-34 and in our UK Patent Specification No. 1557199 (W.A.Crossland et al. 10-7-1). This involves using a signal of one frequency to switch a homeotropically aligned smectic exhibiting positive dielectric anisotrophy from a clear state into a dynamic scattering state, which relaxes into a static focal-conic scattering state upon removal of the signal; and involves using a signal of a higher frequency to effect erasure restoring a clear homeotropically aligned state. The patent specification also refers to the possibility of using thermal cycling as an alternative way of effecting erasure. This is described in greater detail in a paper by M. Hareng et al, in a paper entitled 'Flat Matrix Addressed Smectic Liquid Crystal Display' appearing at page 106 in the Digest of Technical Papers of the 1981 Society of Information Display International Symposium (New York, USA), where erasure is effected line by line by directing current pulses along the transparent electrode lines to promote localised Joule heating. Alternatively a smectic cell may be switched by pulses after the manner described in our Patent Specification No. 2067811A (W.A. Crossland et al. 29-9-1).

A useful attribute of these types of smectic display mode is that they possess an almost indefinite storage characteristic and so allow a large number of lines to be addressed on a time sharing basis without recourse to the use of an active semiconductor matrix to back the array.

Some of the electro-optic effects produced in cholesteric liquid crystals also exhibit storage, but for shorter periods of time. Among the cholesteric display modes that are possible to use with this device are the type of scattering phase transition device described by C.Tani et al in the paper entitled 'Storage-Type Liquid Crystal Matrix Display' appearing in the 1979 Society for Information Display International Symposium (Chicago, USA) Digest of Technical papers Vol. X, pp 114-5, and the types of scattering phase transition and ·thermally addressed displays described and referenced in sections 2.8.2.3 to 2.8.2.6 pages 139 to 145 of the book by G. Meier et al entitled 'Applications of Liquid Crystals' published by Springer Verlag 1975.

Electro-optic scattering effects in the nematic phase may also be used, but typically the relaxation times associated with such effects provide relatively severe multiplexing problems if recourse is not to be had to the use of some form of active matrix drive arrangement.

CLAIMS :-

1.      A transmission type matrix addressed liquid crystal display device operable in a scattering mode, which device includes a liquid crystal layer sandwiched between two transparent electroded substrates and is constructed for being back lit at an oblique angle via illumination control means adapted to minimise or eliminate direct transmission of light through the layer within an intended range of display viewing angle, whereby portions of the layer that scatter light in a forward direction are revealed against a dark background, wherein the illumination control means incorporates a plurality of filters of different colours in optical registry with the elements of the matrix array, whereby the device is operable to provide a polychromatic image.

2.      A display device as claimed in claim 1, wherein the illumination control means consists of or includes an optical louvre system.

3.      A display device as claimed in claim 1 or 2, wherein the liquid crystal layer is a smectic layer.

4.      A display device as claimed in claim 1 or 2, wherein the liquid crystal layer is a cholesteric layer.

5.      A display device as claimed in claim 1 or 2, wherein the liquid crystal layer is a nematic layer.

6.      A display device as claimed in any preceding claim, wherein the colours of the filters are red, green and blue.

7.      A display device as claimed in any preceding claim, wherein a proportion of the elements of the matrix register with no filter and thus are directly back lit.

8.      A display device substantially as hereinbefore described with reference to Figure 1 or 2 of the accompanying drawings.

**Fig.1.**

$\alpha$

8B
2
3
4
8R
5
6
6a
6b
8G
7
8B

0096203

Fig.2.

1

2

3

4

5

21B

20

21R

21G

21B

W. CROSSLAND 36.6.2

**European Patent Office**

## EUROPEAN SEARCH REPORT

| | DOCUMENTS CONSIDERED TO BE RELEVANT | | EP 83103963.1 |
|---|---|---|---|

| Category | Citation of document with indication, where appropriate, of relevant passages | Relevant to claim | CLASSIFICATION OF THE APPLICATION (Int. Cl. ³) |
|---|---|---|---|
| Y | EP - A1 - 0 025 590 (INTERNATIONAL STANDARD) <br> * Totality * | 1 | G 09 F 9/35 <br> G 02 F 1/13 |
| A | | 2 | |
| | -- | | |
| Y | FR - A1 - 2 451 082 (HITACHI) <br> * Fig. 1a,1b * | 1 | |
| A | | 6 | |
| | -- | | |
| A | EP - A1 - 0 025 821 (LICENTIA) <br> * Fig. 1: page 3, lines 10-18 * | 1,2 | |
| | -- | | |
| A | FR - A1 - 2 463 471 (INTERNATIONAL STANDARD) <br> * Fig. 2,3 * | 1,2 | |
| | | | TECHNICAL FIELDS SEARCHED (Int. Cl. ³) |
| | -- | | |
| A | DE - B - 2 042 180 (RCA) <br> * Fig. 1; column 2, line 67 - column 3, line 5 * | 1,2,5 | G 09 F 9/00 <br> G 02 F 1/00 |
| | -- | | |
| A | US - A - 3 811 751 (MYER) <br> * Fig. 1,2 * | 1,2 | |
| | -- | | |
| A,D | GB - A - 1 557 199 (STANDARD) <br> * Totality * | 3 | |
| | -- | | |

| The present search report has been drawn up for all claims | | |
|---|---|---|
| Place of search <br> VIENNA | Date of completion of the search <br> 18-07-1983 | Examiner <br> GRONAU |

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| A,D | DIGEST OF TECHNICAL PAPERS OF THE 1981 SID INTERNATIONAL SYMPOSIUM, April 1981<br><br>M. HARENG et al., "Flat Matrix Addressed Smectic Liquid Crystal Display"<br>pages 106,107<br><br>-- | | |
| A,D | DIGEST OF TECHNICAL PAPERS OF THE 1979 SID INTERNATIONAL SYMPOSIUM, May 1979<br><br>CH. TANI et al., "Storage-Type Liquid Crystal Matrix Display"<br>pages 114,115<br><br>* Totality *<br><br>---- | 4 | TECHNICAL FIELDS SEARCHED (Int. Cl. 3) |